# EUROPEAN PATENT APPLICATION

(11) **EP 4 002 857 A1**
(43) Date of publication of application: **25.05.2022**
(21) Application number: 20306373.0
(22) Date of filing: 13.11.2020
(51) Int. Cl.: H04N 21/266, H04N 21/2668, H04N 21/6405, H04N 21/6408, H04N 21/81, H04N 21/8358, H04N 21/845

(54) **METHOD AND SYSTEM FOR CUSTOMIZED AUDIO AND/OR VIDEO CONTENT DELIVERY**

(71) Applicant: Broadpeak, 35510 Cesson Sevigne (FR)
(72) Inventor: SCOUARNEC, Nicolas, 35510 Cesson Sévigné (FR); STERKERS, Damien, 35510 Cesson Sévigné (FR)
(74) Representative: Cabinet Le Guen Maillet

(57) **Abstract**

For delivering a customized audio and/or video content from a server equipment to a plurality of clients, the audio and/or video content being segmented into data segments, a method comprises: delivering common data segments via a multicast communication, delivering customized data segments via unicast communications, and building, for each client according to an identifier of the client in question or information derived therefrom, one said customized audio and/or video stream from common data segments provided in multicast form by the server equipment and further including customized data segments provided in unicast form by the server equipment for customization to the client in question, wherein one or more customized data segments are interleaved between common data segments.

## Description

### TECHNICAL FIELD

The present invention generally relates to delivering, from a server equipment to a client, an audio and/or video content including data customized to the client.

### RELATED ART

HTTP-based streaming technologies are very convenient, as HTTP allows going through firewalls and guarantees data integrity by relying on TCP ("Transmission Control Protocol", as defined by the normative document RFC 793). HTTP-based streaming technologies are nowadays becoming widely used over the Internet for delivery audio and/or video contents, for example using adaptive bitrate (ABR) approach to ensure service continuity in varying network conditions and consequently provide enhanced end-user experience.

Accesses to audio and/or video contents are more and more performed on-demand. Content providers are more and more willing to address personalized additional content (such as targeted advertisements) to the users or terminals to which the audio and/or video content is delivered. As illustratively disclosed below with watermarking and personalized advertisement use cases, there are thus many situations in which it is desirable to enable providing customized data when delivering an audio and/or video content to a user or terminal.

According to first use case, studios as well as audio and/or video content providers require that high-quality content streamed over the Internet is protected by a watermark, or the like, in order to help struggling against illegal or unsolicited copying of the audio and/or video content. Watermark is a hidden mark inside the audio and/or video content, which is invisible to human perception when the audio and/or video content is being played. Such a watermark is typically persistent against copying and altering the audio and/or video content (using error correcting codes or traitor tracing codes such as Tardos codes) to cope with accidental or malicious modifications thereof. In case of presence of copy, the watermark can be extracted therefrom and the leak can be traced back to the person who shared the copy of the audio and/or video content. To be efficient, the watermark (i.e., a sequence of '0' and '1' binary codes) shall be uniquely associated with the user or terminal to which the audio and/or video content is delivered.

When using watermarking in online streaming, audio and/or video content segments delivered to the user or terminal depend on an identifier of the user or terminal, or information uniquely derived from said identifier. Each segment is quoted from either a set A of first segments (e.g., marked with a '0' binary code) or a set B of second segments (e.g., marked with a '1' binary code) so that the watermark included in consecutive segments of the audio and/or video content form the identifier of the user or terminal, so as to be retrievable from the consecutive segments. Considering a schematical example of an identifier that equals to '00011010110', the audio and/or video content delivered to the terminal is built from consecutive segments quoted from the sets A and B as follows: AAABBABABBA. This can easily be achieved by encoding and storing only two copies of the audio and/or video content segments (one for the set of segments A (e.g., marked with a '0' binary code) and one for the set of segments B (e.g., marked with a '1' binary code)) thus leading to optimized processing resources usage of encoders and storage resources usage of server equipment.

According to second use case, content providers wish to provide customized advertisement content to each user or terminal. In this case, the content providers wish to deliver a same audio and/or video content to plural clients, and to further deliver at some points customized (per client) advertisement.

The unicast nature of HTTP enables easily performed per-client customization. However, the unicast nature of HTTP is challenging for infrastructure seizing, since clients may massively solicit server equipment concurrently. It thus requires numerous server processing resources (machines...) to process clients requests, as well as high-bandwidth communications networks to interconnect numerous clients to the server equipment.

In order to cope with consumption of processing and bandwidth resources, it is known to rely on multicast transmissions, as far as live streaming is concerned. However, multicast is contradictory to per-client customization.

It is thus desirable to overcome the foregoing drawbacks of the prior art, and more particularly to provide a solution to enable per-client customization while delivering an audio and/or video content from a server equipment in a Content Delivery Network (CDN) to a plurality of clients, while enhancing consumption of processing and bandwidth resources. It is in particular desirable to provide a solution that operates for per-client watermarking considerations. It is in particular desirable to provide a solution that operates for per-client advertisement considerations. It is in particular desirable to provide a solution that is simple and cost-effective.

### SUMMARY OF THE INVENTION

To that end, it is disclosed herein a method for delivering customized audio and/or video streams from a server equipment to a plurality of clients in a content delivery network CDN, the audio and/or video streams being segmented over time into data segments, wherein the method comprises: delivering common data segments via a multicast communication, common data segments being audio and/or video data segments intended to the plurality of clients; delivering customized data segments via unicast communications, customized data segments being audio and/or video data segments specifically intended for each client; and building, for each client according to an identifier of the client in question or information derived therefrom, one said customized audio and/or video stream from common data segments provided in multicast form by the server equipment and further including customized data segments provided in unicast form by the server equipment for customization to the client in question, wherein one or more customized data segments are interleaved between common data segments. Thus, per-client customization is achieved, while consumption of processing and bandwidth resources is enhanced by relying on multicast communications for common data segments.

According to a particular embodiment, the clients are gathered by groups, the customized data segments are present at predefined timeslots in the audio and/or video streams, and at least some of the predefined timeslots happen at different point in time from one group to any other group. Thus, load of the server equipment is reduced by spraying over time unicast requests for obtaining the customized data segments used for per-client customization.

According to a particular embodiment, regularly one or more predefined timeslots for customized data segments are common to all groups, while other predefined timeslots for customized data segments happen at different point in time from one group to any other group. Thus, unicast solicitations of the server equipment for obtaining customized data are spread over time, and thus less resources are needed to deliver the customized data.

According to a particular embodiment, the server equipment transmits the customized data segments at lower throughput than the common data segments. Thus, peaks of processing resources consumption at the server equipment are lowered since lower throughput is enforced for unicast communications than for multicast communications.

According to a particular embodiment, the customized data are watermark specific to the identifier of the client or to information derived therefrom. Thus, retrieval of identification of a user from which a copy of the audio and/or video stream has leaked can be easily achieved although processing and network resources usage has been enhanced thanks to multicast communications.

According to a particular embodiment, a quantity of plural versions *Qv* is available for each customized data segment, each customized data segment including only a portion of the identifier of the client or of the information derived therefrom, the quantity *Qv* being the quantity of watermark possible variants in each customized data segment. Thus, watermarking can easily be achieved.

According to a particular embodiment, the clients are gathered by groups, the common data segments for each group are present at predefined timeslots in the audio and/or video stream, the common data are watermarked specifically to an identifier of the group to which the common data are intended, or to information derived therefrom, and a quantity of plural versions *Q*'*v* is available for each common data segment, each common data segment including only a portion of the identifier of the group or of the information derived therefrom, the quantity *Q'v* being the quantity of watermark possible variants in each common data segment. Thus, watermarking can easily be achieved on a group basis with need of low quantity of versions for each segment.

According to a particular embodiment, the customized data are advertisement data. Thus, per-client advertisement customization can be achieved while enhancing processing and network resources usage thanks to multicast communications.

According to a particular embodiment, for at least one client, the audio and/or video stream is built by an agent in a device interconnecting a first network via which the at least one client in question is made accessible to the agent and a second network via which the server equipment is made accessible to the agent, the agent communicating with the at least one client in unicast form, the agent performing a multicast-to-unicast conversion of the common data received in multicast form from the server equipment. Thus, the multicast nature of transmissions of common data may be hidden to the clients, which means that the usage of multicast transmissions is transparently put in place for unicast-only clients, while still benefiting from the network resources consumption advantages of the multicast transmissions.

According to a particular embodiment, for at least one client, the audio and/or video stream is built by the at least one client in question, the at least one client obtains the customized data from the server equipment and obtains the common data from an agent communicating with which the at least one client communicates in unicast form, the agent being embedded in a device interconnecting a first network via which the at least one client in question is made accessible to the agent and a second network via which the server equipment is made accessible to the agent, the agent performing a multicast-to-unicast conversion of the common data received in multicast form from the server equipment. Thus, the multicast nature of transmissions of common data may be hidden to the clients (in a different approach as above), which means that the usage of multicast transmissions is transparently put in place for unicast-only clients, while still benefiting from the network resources consumption advantages of the multicast transmissions.

According to a particular embodiment, the server equipment delivers continuous segments in multicast form and the audio and/or video stream is built by replacing segments received in multicast form by customized data segments. Thus, multicast transmissions are easily managed.

It is further proposed a content delivery network CDN configured for delivering a customized audio and/or video stream from a server equipment of the content delivery network CDN to a plurality of clients, the audio and/or video stream being segmented over time into segments, wherein the content delivery network CDN comprises electronics circuitry configured for: delivering common data segments via a multicast communication, common data segments being audio and/or video data segments intended to the plurality of clients; delivering customized data segments via unicast communications, customized data segments being audio and/or video data segments specifically intended for each client; building, for each client according to an identifier of the client in question or information derived therefrom, the customized audio and/or video stream from common data segments provided in multicast form by the server equipment and further including customized data segments provided in unicast form by the server equipment for customization to the client in question, wherein one or more customized data segments are interleaved between common data segments.

According to a particular embodiment, the content delivery network CDN is arranged such that the customized data are watermark specific to the identifier of the client or to information derived therefrom.

According to a particular embodiment, the content delivery network CDN is arranged such that the customized data are advertisement data.

### BRIEF DESCRIPTION OF THE DRAWINGS

The characteristics of the invention will emerge more clearly from a reading of the following description of at least one embodiment, said description being produced with reference to the accompanying drawings, among which:
- Fig. 1 schematically represents an audio and/or video content delivery system in which the present invention may be implemented;
- Fig. 2 schematically represents an example of hardware architecture of a device usable in the scope of the audio and/or video content delivery system;
- Fig. 3A schematically represents transmission paths of data for building an audio and/or video content stream delivered to a client in the audio and/or video content delivery system, according to a first embodiment;
- Fig. 3B schematically represents transmission paths of data for building an audio and/or video content stream delivered to a client in the audio and/or video content delivery system, according to a second embodiment;
- Fig. 3C schematically represents transmission paths of data for building an audio and/or video content stream delivered to a client in the audio and/or video content delivery system, according to a third embodiment;
- Fig. 4 schematically represents candidate successions of segments for illustratively enabling building four per-client customized audio and/or video content streams;
- Fig. 5A schematically represents streams of segments for enabling per-client customization in different groups of clients, according to a first embodiment;
- Fig. 5B schematically represents streams of segments for enabling per-client customization in different groups of clients, according to a second embodiment;
- Fig. 6 schematically represents an algorithm for building an audio and/or video content stream including customized data;
- Fig. 7A schematically represents an algorithm for managing transmission of segments in a per-client customized audio and/or video content stream, in one embodiment.; and
- Fig. 7B schematically represents an algorithm for managing transmission of segments in a per-client customized audio and/or video content stream, in another embodiment.

### DETAILED DESCRIPTION OF AT LEAST ONE EMBODIMENT

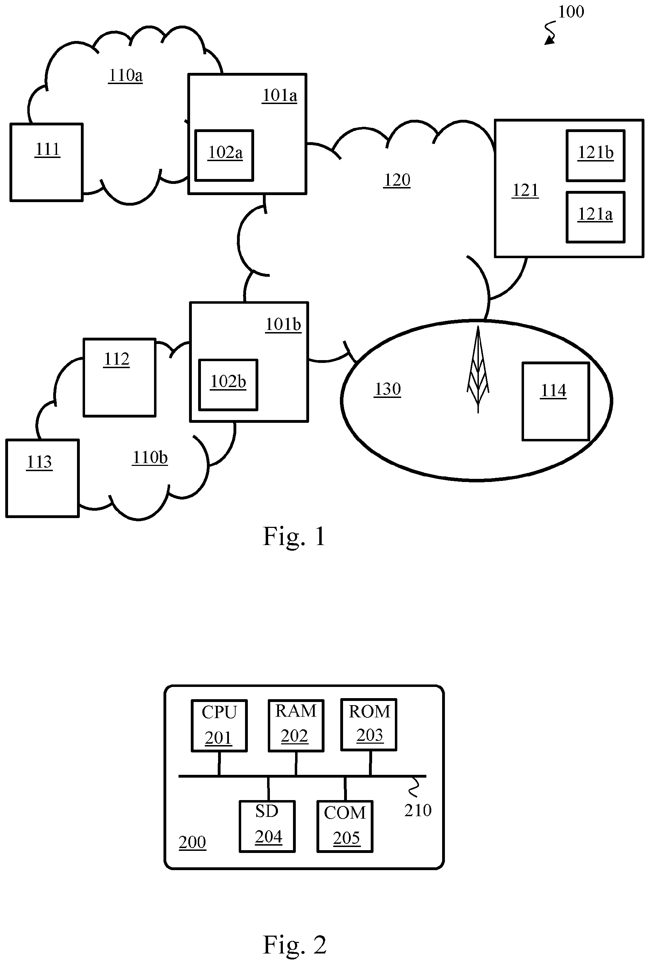

**Fig. 1** schematically represents an audio and/or video content delivery system 100 comprising a server equipment 121 configured to deliver audio and/or video contents to clients 111, 112, 113, 114. The audio and/or video content delivery system 100 is dedicated to delivery of live audio and/or video contents (e.g., TV channel, sport event...). Audio and/or video contents are divided into consecutive segments, which are numbered and/or time-referenced for identification purpose. Dividing into segments eases transmission and recovery over communication networks.

The server equipment comprises a unicast server equipment part 121a and a multicast server equipment part 121b. The unicast server equipment part 121a and the multicast server equipment part 121b are jointly used, as detailed hereinafter, to deliver audio and/or video contents data as well as customized data to the clients 111, 112, 113, 114. The server equipment 121 may be a single server machine or a cluster of server machines. For instance, the unicast server equipment part 121a and multicast server equipment part 121b are located on distinct server machines.

The client 111 may communicate with the server equipment 121 through a network interconnecting device 101a, such as a home gateway, configured to interconnect a first network 120, via which the server equipment 121 is made accessible to the network interconnecting device 101a, and a second network 110a, via which the client 111 is made accessible to the network interconnecting device 101a. For instance, the first network 120 is Wide Area Network (WAN), such as the Internet, and the second network is a Local Area Network (LAN), such as a wireless LAN according to the IEEE 80.11 set of standard specifications.

Identically, the clients 112, 113 may communicate with the server equipment 121 through a network interconnecting device 101b, such as a home gateway, configured to interconnect the first network 120 and another second network 110b, via which the clients 112, 113 are made accessible to the network interconnecting device 101b.

The network interconnecting devices 101a, 101b respectively include multicast-to-unicast converter agents 102a, 102b. The multicast-to-unicast converter agents 102a, 102b receive audio and/or video segments from the server equipment 121 in multicast form and convert them into unicast form in order to permanently communicate with the clients 111, 112, 113 in unicast fashion for the delivery of audio and/or video data. For instance, RTP ("Real-time Transport Protocol", as defined by the normative document RFC 3550) over UDP ("User Datagram Protocol", as defined by the normative document RFC 768) may be used to perform multicast transmissions from the server equipment 121 to the network interconnecting devices 101a, 101b. The multicast-to-unicast converter agents 102a, 102b may complement the audio and/or video segments received from the server equipment 121 in multicast form with audio and/or video segments received from the server equipment 121 in unicast form.

The client 114 may communicate with the server equipment 121 through a wireless access network 130 to which the first network 120 is connected. For instance, the wireless access network 130 is a cellular communications network according to the 3GPP Long Term Evolution (LTE) set of standard specifications.

The client 114 includes a unicast and multicast capable transmission interface. For instance, the client 114 may implement 3GPP Multimedia Broadcast Multicast Service (MBMS) features. The client 114 is thus able to receive audio and/or video segments from the server equipment 121 in multicast form. The client 114 complements the audio and/or video segments received from the server equipment 121 in multicast form with audio and/or video segments received from the server equipment 121 in unicast form.

The clients 111, 112, 113, 114 are user terminals that include audio and/video players, such as smartphones, computers, laptops, tablets, personal music players, home entertainment media player, etc. As detailed hereinafter, the clients 111, 112, 113, 114 receive customized audio and/or video content from the server equipment 121 with common data issued by the multicast server equipment part 121b and customized data issued by the unicast server equipment part 121a. The delivery of audio and/or video contents thus benefits from bandwidth saving advantages of multicast transmissions and customized data can nevertheless be provided on a per-client basis. Various embodiments for building such customized audio and/or video contents are disclosed herein.

**Fig. 2** schematically represents an example of hardware architecture 200 usable in the scope of the audio and/or video content delivery system 100. The hardware architecture 200 may be part of the server equipment 121. The hardware architecture 200 may be part of the network interconnecting devices 101a, 101b implementing the multicast-to-unicast converter agents 102a, 102b. The hardware architecture 200 may be part of terminals implementing the clients 111, 112, 113, 114.

The hardware architecture 200 comprises the following components interconnected by a communications bus 210: a processor, microprocessor, microcontroller or CPU (Central Processing Unit) 201; a RAM (Random-Access Memory) 202; a ROM (Read-Only Memory) 203, such as an EEPROM (Electrically Erasable Programmable ROM), for example a Flash memory; a HDD (Hard-Disk Drive) 204, or any other device adapted to read information stored on a storage medium, such an SD (Secure Digital) card reader; at least one communication interface COM 205.

CPU 201 is capable of executing instructions loaded into RAM 202 from ROM 203 or from an external memory, such as HDD 204 or an SD card. After the hardware architecture 200 has been powered on, CPU 201 is capable of reading instructions from RAM 202 and executing these instructions. The instructions form one computer program that causes CPU 201 to execute the steps and behaviors disclosed herein with respect to the server equipment 121, the multicast-to-unicast converter agents 102a, 102b, and the clients 111, 112, 113, 114.

Thus, the steps and algorithms described herein may be implemented in software form by execution of a set of instructions or program by a programmable computing machine, such as a PC, a DSP (Digital Signal Processor) or a processor; or else implemented in hardware form by a machine or a dedicated component, chip or chipset, such as an FPGA (Field-Programmable Gate Array) or an ASIC (Application-Specific Integrated Circuit). More generally, the server equipment 121, the multicast-to-unicast converter agents 102a, 102b, and the clients 111, 112, 113, 114 comprise electronic circuitry configured to perform the steps and algorithms described herein with respect to the device or apparatus in question.

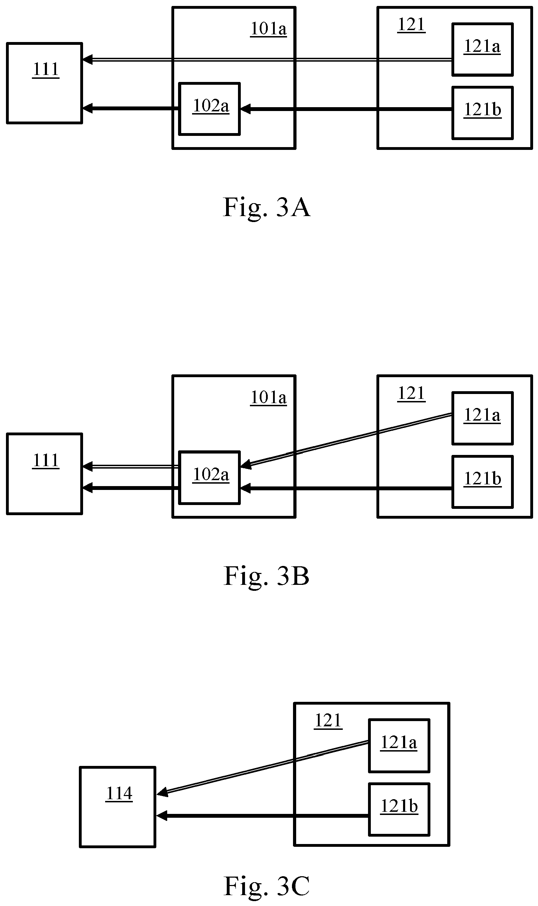

**Figs. 3A, 3B** and **3C** schematically represent various embodiments of transmission paths of data for building an audio and/or video content stream delivered to a client, such as the client 111 or 114, in the audio and/or video content delivery system 100.

In Fig. 3A, the client 111 receives first segments in unicast form from the multicast-to-unicast converter agent 102a. These first segments result from multicast-to-unicast conversion of segments received in multicast form from the multicast server equipment part 121b. Since the first segments are transmitted by the multicast server equipment part 121b in multicast form, they correspond to parts of the audio and/video streams which are common to all clients to which the multicast transmission is intended at the end. The client 111 further receives second segments in unicast form during unicast exchanges between the client 111 and the unicast server equipment part 121a. The second segments correspond to parts of the audio and/video streams which are customized per client. These unicast exchanges may occur through the network interconnecting devices 101a (e.g., for Network Address Translation (NAT) considerations), but out of operational framework of the multicast-to-unicast converter agent 102a. In a variant, these exchanges occur via distinct network access, for example via another wireless access network such as a cellular communications network. The client 111 thus receives segments issued by the unicast server equipment part 121a, for customized data, and segments issued by the multicast server equipment part 121b, for common data.

In Fig. 3B, the client 111 receives all segments in unicast form from the multicast-to-unicast converter agent 102a. The multicast-to-unicast converter agent 102a receives first segments in multicast form from the multicast server equipment part 121b. These first segments correspond to parts of the audio and/video streams which are common to all clients to which the multicast transmission is intended at the end. The multicast-to-unicast converter agent 102a further receives second segments in unicast form from the unicast server equipment part 121a. The second segments correspond to parts of the audio and/video streams which are customized per client. The multicast-to-unicast converter agent 102a builds a stream of audio and/or video data issued from the second segments and audio and/or video data issued from multicast-to-unicast conversion of the first segments. The multicast-to-unicast converter agent 102a then transmits this stream in unicast form to the client 111. The client 111 thus receives segments issued by the unicast server equipment part 121a, for customized data, and segments issued by the multicast server equipment part 121b, for common data. It can be noted that the arrangement of Fig. 3B can be implemented elsewhere than in a network interconnecting device such as a home gateway. Indeed, it can be implemented in a trusted box, such as a set top box, which interacts with the server equipment 121 and performs multicast-to-unicast conversion for the common data and ensure inclusion of customized data in the audio and/or video stream delivered to the client 111.

Since in Fig. 3B, the customized data are received via an intermediary device, namely the multicast-to-unicast converter agent 102a or the set top box, which rebuilds the audio and/or video stream on behalf of the server equipment 121 and the client 111, entrustment of the multicast-to-unicast converter agent 102a or set top box may be confirmed beforehand by authentication exchanges.

In Fig. 3C, the client 114 receives first segments in multicast form from the multicast server equipment part 121b. These first segments correspond to parts of the audio and/video streams which are common to all clients to which the multicast transmission is intended at the end. The client 114 further receives second segments in unicast form from the unicast server equipment part 121a. The second segments correspond to parts of the audio and/video streams which are customized per client. The client 111 thus receives segments issued by the unicast server equipment part 121a, for customized data, and segments issued by the multicast server equipment part 121b, for common data. The client 114 creates a stream of audio and/or video data issued from the second segments and audio and/or video data issued from multicast-to-unicast conversion of the first segments.

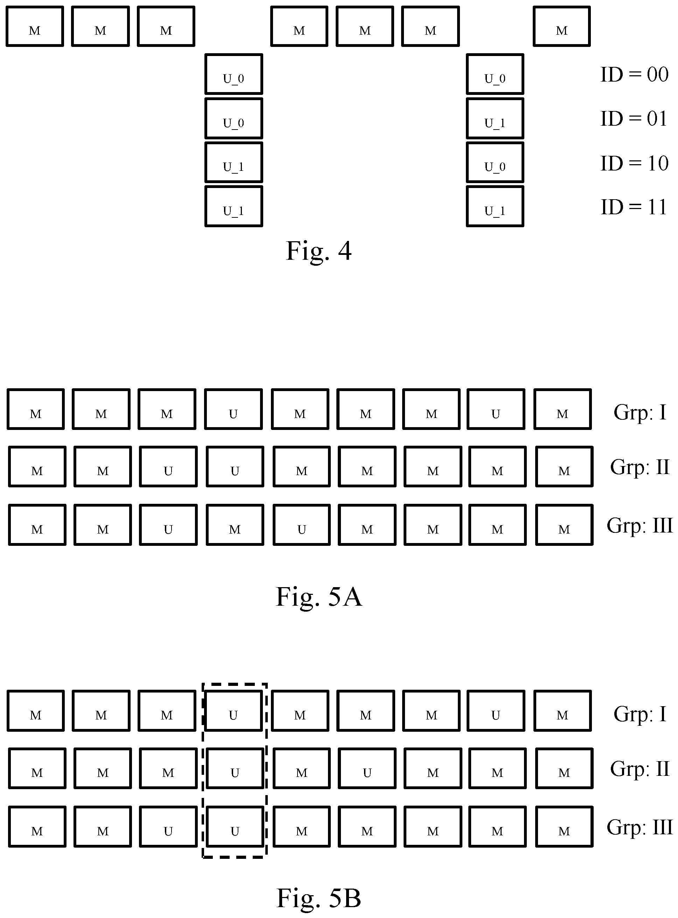

**Fig. 4** schematically represents candidate successions of segments for illustratively enabling building four per-client customized audio and/or video content streams. Fig. 4 illustratively considers 9 consecutive segment timeslots in an audio and/or video stream. In the 9 consecutive segment timeslots, the 3 first segment timeslots in sequence provide audio and/or video data coming from segments transmitted in multicast form. This part of the audio and/or video content delivered for being played corresponds to common data. The subsequent segment timeslot in sequence provides audio and/or video data coming from segments transmitted in unicast form. This part of the audio and/or video content delivered for being played corresponds to customized data. Then, the 3 following segment timeslots in sequence provide audio and/or video data coming from segments transmitted in multicast form. This part of the audio and/or video content delivered for being played corresponds to common data. Then, the subsequent segment timeslot in sequence provides audio and/or video data coming from segments transmitted in unicast form. This part of the audio and/or video content delivered for being played corresponds to customized data. Finally, the last segment timeslot in sequence provides audio and/or video data coming from segments transmitted in multicast form. This part of the audio and/or video content delivered for being played corresponds to common data.

Considering the particular embodiment of watermarking, Fig. 4 shows principles of building four audio and/or video streams customized for four distinct clients. Let's consider that the four clients have been assigned distinct identifiers, represented here on 2 digits ('00','01','10','11'). The server equipment 121 has some segments that contain data common to plural clients and that do not contain watermark and has some segments that contain data customized per client. The positions of the segments that contain common data (1^{st}, 2^{nd}, 3^{rd}, 5^{th}, 6^{th}, 7^{th} and 9^{th} positions in the sequence of Fig. 4) and of the segments that contain customized data (4^{th} and 8^{th} positions in the sequence of Fig. 4) are predetermined.

The customized data depend on the client identifier, or of information derived therefrom. Each timeslot intended for customized data is associated with one digit of the identifiers (in Fig. 4, the 4^{th} position in the considered sequence is associated with the left digit of the identifier and the 8^{th} position in the considered sequence is associated with the right digit of the identifier). Two versions of the segments exist for each timeslot intended for customized data, one (U_0) with one watermark when the timeslot corresponds to a digit of the client identifier, or of the information derived therefrom, which equals to '0' and one (U_1) with one other watermark when the timeslot corresponds to a digit of the client identifier, or of the information derived therefrom, which equals to '1'.

For example, the client with identifier '00' is delivered a stream sequence with 9 consecutive segments, wherein the 3 first ones contain audio and/video data issued from the multicast segments, the next one contains audio and/video data issued from the corresponding segment in the version U_0, the 3 next ones contain audio and/video data issued from the corresponding multicast segments, the next one contains audio and/video data issued from the corresponding segment in the version U_0, and the last one contains audio and/video data issued from the corresponding multicast segment. The client with identifier '01' is delivered a stream sequence with 9 consecutive segments, wherein the 3 first ones contain audio and/video data issued from the multicast segments, the next one contains audio and/video data issued from the corresponding segment in the version U_0, the 3 next ones contain audio and/video data issued from the corresponding multicast segments, the next one contains audio and/video data issued from the corresponding segment in the version U_1, and the last one contains audio and/video data issued from the corresponding multicast segment. The client with identifier '10' is delivered a stream sequence with 9 consecutive segments, wherein the 3 first ones contain audio and/video data issued from the multicast segments, the next one contains audio and/video data issued from the corresponding segment in the version U_1, the 3 next ones contain audio and/video data issued from the corresponding multicast segments, the next one contains audio and/video data issued from the corresponding segment in the version U_0, and the last one contains audio and/video data issued from the corresponding multicast segment. The client with identifier '11' is delivered a stream sequence with 9 consecutive segments, wherein the 3 first ones contain audio and/video data issued from the multicast segments, the next one contains audio and/video data issued from the corresponding segment in the version U_1, the 3 next ones contain audio and/video data issued from the corresponding multicast segments, the next one contains audio and/video data issued from the corresponding segment in the version U_1, and the last one contains audio and/video data issued from the corresponding multicast segment. Thus, when a copy of the audio and/or video content is found, analysing consecutives sequence of segments enable retrieving the inserted watermarks at the predetermined timeslots dedicated to customized data and deduce therefrom from which client the copy originates.

In a particular embodiment, more than two versions of the segments exist for each segment timeslot intended for customized data. The quantity *Qv* of versions of eah segment is the quantity of watermark possible variants in each customized data segment. For example, the quantity of versions *Qv* available depends on the quantity *Qd* of (binary) digits which are represented by the watermark in the customized data segment timeslot, with *Qv* = 2*^{Qd}*. Since the proportion of multicast segments (not customized) among all segments delivered to a client 111, 112, 113, 114 might be significantly more compared with the proportion of unicast (customized) segments among all segments delivered to said client 111, 112, 113, 114, this particular embodiment enables increasing the quantity of clients that can be simultaneously managed while maintaining a reasonable time to acquire, from the audio and/or video data stream, watermark for a complete identifier. The benefits of multicast transmission are preserved, at the cost of extra processing and storage resources to generate and make available the various versions for each segment timeslot intended for customized data.

It appears from the foregoing example that one tenth of the segments may be issued by the unicast server equipment part 201a for each stream delivered to a client 111, 112, 113, 114. This is significantly advantageous in terms of bandwidth resources consumption, as well as of processing resources at the unicast server equipment part 201a.

In a particular embodiment, plural multicast streams may be available in parallels for the same representation (audio and/video quality), one multicast stream for each group of a predefined set of groups, each group having its own identifier. In this case, the same principle applies for the multicast segments as explained above for the customized unicast segments. Two versions of the segments exist for each timeslot intended for multicast data, one (M_0) with one watermark when the timeslot corresponds to a digit of the group identifier which equals to '0' and one (M_1) with one other watermark when the timeslot corresponds to a digit of the group identifier which equals to ' 1'. Such an approach enables managing more users without increasing too much recourse to unicast transmissions, considering that part of the user identifier is formed by the identifier of the group to which said user belongs. It can further be noted that more than two versions of the common data segments may exist for each segment timeslot intended for watermarked common data. The quantity *Qv* of versions of eah segment is the quantity of watermark possible variants in each common data segment. For example, the quantity of versions *Q*'*v* available depends on the quantity *Q'd* of (binary) digits which are represented by the watermark in the common data segment timeslot, with *Q'v* = 2*^{Q'd}.*

Now considering the particular embodiment of advertisement, plural segments timeslots intended for customized data are most likely to be consecutive in sequence, in order to allow enough display time for the customized data contained therein (e.g., for displaying an audio-visual commercial adapted to client's profile). However, the principles of Fig. 4 still apply. For example, the client with identifier '00' is delivered, at each segment timeslot intended for customized data, audio and/or video data segments that are specifically selected according to the corresponding client identifier, or information derived therefrom. The clients with other identifiers are delivered distinct audio and/or video segment content during these segments timeslots.

In another particular embodiment, more than two versions of the segments may exist for each segment timeslot intended for customized data in the scope of the advertisement context. The quantity of versions *Qv* represents the quantity of alternative advertisement programs concurrently available. For example, users are divided into a predefined set of profiles (e.g., according to users' age or interests), each one with a unique identifier, and the advertisement program to be delivered as customized data to such or such user depends on the profile to which said user has been affected.

**Fig. 5A** schematically represents streams of segments for enabling per-client customization in different groups of clients, according to a first embodiment.

In this embodiment, clients of the audio and/or video content delivery system 100 are gathered by groups and one multicast stream is generated and transmitted per group. Groups of clients are for example formed by geographical (location, as revealed by IP addresses of the clients) grouping. The sequence of segment timeslots dedicated to common data and to customized data differs from one group to another. Illustratively, in Fig. 5A for Group I, the positions of the segments that contain common data are the 1^{st}, 2^{nd}, 3^{rd}, 5^{th}, 6^{th}, 7^{th} and 9^{th} positions and those of the segments that contain customized data are the 4^{th} and 8^{th} positions. And for Group II, the positions of the segments that contain common data are the 1^{st}, 2^{nd}, 5^{th}, 6^{th}, 7^{th}, 8^{th} and 9^{th} positions and those of the segments that contain customized data are the 3^{rd} and 4^{th} positions. And for Group III, the positions of the segments that contain common data are the 1^{st}, 2^{nd}, 4^{th}, 6^{th}, 7^{th}, 8^{th} and 9^{th} positions and those of the segments that contain customized data are the 3^{rd} and 5^{th} positions. As shown in Fig. 5A, only some positions may be in common from one group to another group for placing customized data. In other words, considering that the clients are gathered by groups, the customized data segments are present at predefined timeslots in the audio and/or video stream, and at least some of the predefined timeslots happen at different point in time from one group to any other group. It enables ensuring that not all clients would solicit the unicast server equipment part at the same time (if all the segment timeslots dedicated to customized data are uniquely assigned to any group, only the clients of the same group simultaneously solicit the unicast server equipment part 201a), which thus smooths solicitation peaks for the unicast server equipment part 201a.

A second embodiment is shown in **Fig. 5B****.** Here still, the sequence of segment timeslots dedicated to common data and to customized data differs from one group to another. However, one or more segments timeslot in the sequence are dedicated to customized data for any and all group (at the 4^{th} position in Fig. 3B). In other words, regularly one or more predefined timeslots for customized data segment are common to all groups, while other predefined timeslots for customized data segment happen at different point in time from one group to any other group. Despite it creates a regular peak of solicitations toward the unicast server equipment part 201a, it ensures more particularly in the watermarking use case that a complete single audio and/or video stream cannot be rebuilt from plural streams addressed to respective clients.

It can be noticed that, in the watermarking use case, the scheme shown in Fig. 5A or 5B further enables identifying from which group a leak (copy) comes and the source of the leak within the group, which might facilitate investigations.

The group in which a client belongs defines Uniform Resource Locator (URL) or Uniform Resource Indication (URI) path inserted in a manifest file delivered to said client for providing location information about the segments (distinct Uniform Resource Locator or Uniform Resource Indication path information from one group to another).

The manifest file (also referred to as playlist file) describes how the audio and/or video stream is organized. It provides information about the audio and/or video content. It may for example indicate in which representations (qualities) the audio and/or video content is available in case of adaptive bitrate (ABR). It may for example provide addresses for joining such or such multicast communication related to the audio and/or video content in question or for contacting the unicast server equipment part 121a, also this information may be known by many other ways.

In order to ensure that the clients 111, 112, 113, 114 or the multicast-to-unicast converter agent 102a, 102b request appropriately the unicast segments for customized data, the manifest file may include URL or URI path information adapted according to the client (identifier), and possibly to the group to which the client belongs. The manifest file is thus specific to each client and points directly to the customized segment to be served. With this URL or URI path information, information to be retained by the unicast server equipment part 121a during audio and/or video content delivery sessions is limited.

In a variant, the manifest file is independent from the client requesting it. Thus, the server equipment 121 decides on its own which appropriate customized segment (e.g., whether segment in the version U_1 or U_0 should be delivered). The server equipment 121 uses a client identifier indication contained in each unicast request for customized data. The server equipment 121 knows therefrom and from knowledge of the segment timeslot concerned which appropriate customized data have to be transmitted in response.

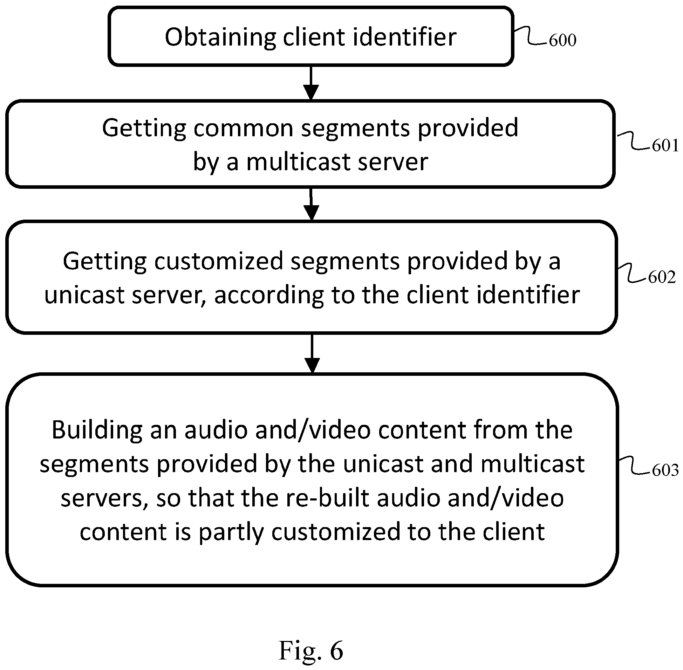

**Fig. 6** schematically represents an algorithm for building an audio and/or video content stream including customized data. The algorithm of Fig. 6 is a method implemented by a device of the audio and/or video content delivery system 100 which receives data in multicast form as well as data in unicast form so as to rebuild a complete audio and/video stream to be displayed. Considering Fig. 3A, the algorithm of Fig. 6 is implemented by the client 111. Considering Fig. 3B, the algorithm of Fig. 6 is implemented by the multicast-to-unicast converter agent 102a. Considering Fig. 3C, the algorithm of Fig. 6 is implemented by the client 111.

In a step 600, the method comprises obtaining a client identifier. The client identifier corresponds to the client to which the audio and/or video stream is intended. In the case of Fig. 3B, the multicast-to-unicast converter agent 102a obtains the client identifier from the unicast exchanges occurring with the client 111.

The method may comprise obtaining information derived from the client identifier. The information derived from the client identifier may result from an error-correcting code (Reed-Solomon, Low-Density Parity-Check (LDPC) code....) applied to the client identifier, for example for obtaining a set of n = 4096 bits from a client identifier represented by k = 32 bits. The method preferably comprises generating a bitstream of successive repetitions of the client identifier or of the information derived therefrom, so that at least one digit (typically U_0 or U_1) of said bitstream can be associated with each unicast segment for customized data. The information derived from the client identifier may include predefined separators (predefined successions of digits specific to uniquely represent said separator and not used for client identification). The same process applies for multicast segments when identification of the group to which the client belongs is performed thanks to watermark data associated with the multicast segments (typically M_0 or M_1).

In a step 601, the method comprises getting common segments provided by the multicast server equipment part 201b. Preferably, when identification of the group to which the client belongs is performed thanks to watermark data associated with the multicast segments, the method comprises obtaining the next digit(s) in the bitstream generated from the group identifier of the group which the client belongs which is(are) associated with each common segment to be obtained and the multicast server equipment part 201a transmits, for further delivery to the client in question, the common segments corresponding to said digit(s).

In a step 602, the method comprises getting customized segments provided by the unicast server equipment part 201b. The customized segments depends on the client identifier, or on the information derived therefrom, obtained in the step 600, as already disclosed. Preferably, the method comprises obtaining the next digit(s) in the bitstream generated from the client identifier which is(are) associated with each customized segment to be obtained and the unicast server equipment part 201b transmits, for further delivery to the client in question, the customized segments corresponding to said digit(s).

In a particular embodiment, the server equipment 121 transmits the customized data segments at lower throughput than the common data segments. It enables lowering peaks of uncast solicitations for obtaining customized data.

In a step 603, the method comprises building an audio and/video stream from the segments provided by the unicast and multicast server equipment parts, so that the rebuilt audio and/video content is partly customized to the client in question.

In a first embodiment, no segments are missing in the multicast stream transmitted by the multicast server equipment part 201b. In this case, for building the audio and/video stream, the method comprises replacing, at the segment timeslots dedicated to customized data, the multicast segment by the corresponding unicast segment containing the customized data (e.g., watermark). This operation has however to be performed by a trusted device, since the whole audio and/video content could be played only with the multicast data. Withdrawal of the common segments for further replacement by customized data may be forced by the multicast server equipment part 201a using group encryption schemes. Only a legitimate group of receivers is capable of decrypting the common segments using suitable decryption key(s). Transmitting to a receiver common segments that said receiver is not capable of decrypting makes said receiver forcibly delete or ignore the common data and request customized data instead. This arrangement is particularly suitable when multicast is performed using broadcast infrastructure (broadcast transmissions being a particular type of multicast transmissions). Thus, a trusted broadcast receiver replaces, whenever appropriate, common segments received via a broadcast (multicast) transmission by customized segments requested by the trusted broadcast receiver to the unicast server equipment part 201b. This arrangement also applies to a trusted box, such as a set-top box, interacting with the client and delivering the audio and/video content to the client. This arrangement also applies to a trusted module embedded in the client.

In a second embodiment, segments are missing in the multicast stream transmitted by the multicast server equipment part 201b. The missing segments leave room for inserting the unicast segments including the customized data (e.g., watermark). Specific signaling may be used by the multicast server equipment part 201b to notify segments that are intentionally missing for further customized data insertion.

Once the stream is built, the stream is made available for display. Considering Fig. 3A, the client 111 builds and displays the audio and/or video stream. These two operations may be done by distinct modules, hardware and/or software, in the client 111. Considering Fig. 3B, the multicast-to-unicast converter agent 102a builds the audio and/or video stream, and transmits it in unicast form to the client 111 for display. Considering Fig. 3C, the client 114 builds and displays the audio and/or video stream. These two operations may be done by distinct modules, hardware and/or software, in the client 114.

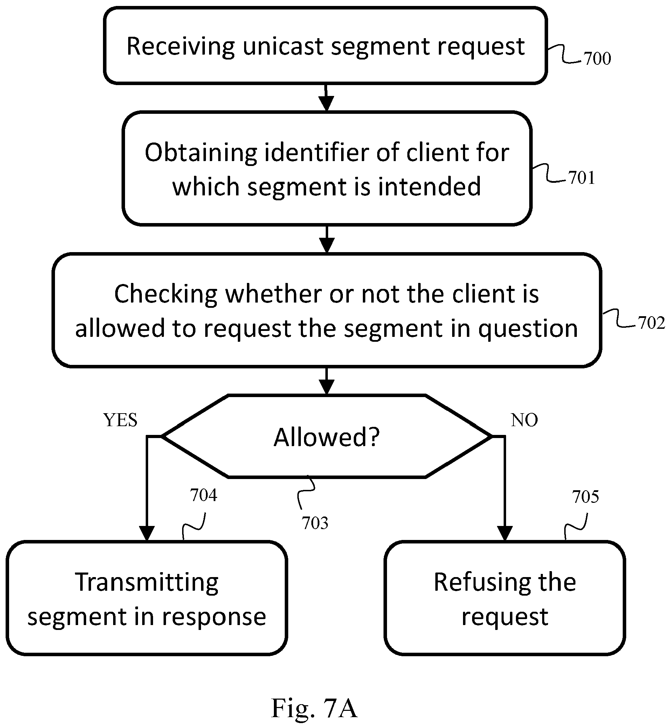

**Fig. 7A** schematically represents an algorithm for managing transmission of segments in a per-client customized audio and/or video content stream, in one embodiment. The algorithm of Fig. 7A is a method implemented by the unicast server equipment part 121b.

In a step 700, the unicast server equipment part 121b receives a unicast segment request. The request thus targets customized data.

In a step 701, the unicast server equipment part 121b determines for which client the targeted customized data are intended. The unicast server equipment part 121b obtains the identifier of the client in question. Typically, the identifier of the client is indicated in the request.

In a step 702, the unicast server equipment part 121b checks whether or not the client is allowed to request the segment in question. For example, the unicast server equipment part 121b checks whether or not the requested segment corresponds to a segment timeslot in which customized data are planned to be transmitted. For example, the unicast server equipment part 121b checks whether or not the requested segment corresponds to a timeslot in which customized data are planned to be transmitted for a group of clients to which the client in question belongs. It can further be noted that signatures or the like may be applied or added to the request to ensure reliability of the origin of the request (trusted device). The result of the check is processed in a step 703: when the client is allowed to request the segment in question, a step 704 is performed; otherwise, a step 705 is performed.

In the step 704, the unicast server equipment part 121b transmits a customized segment in response to the request. In case of plural versions of customized data as already discussed, the unicast server equipment part 121b determines which version to transmit from the segment timeslot concerned and the identifier, and possibly the group, of the client in question. In a variant, the request contains an indication (such as a dedicated URL or URI path) of the version to be provided.

In the step 705, the unicast server equipment part 121b refuses the request, since the segment that is requested does not match the client identifier associated with the request.

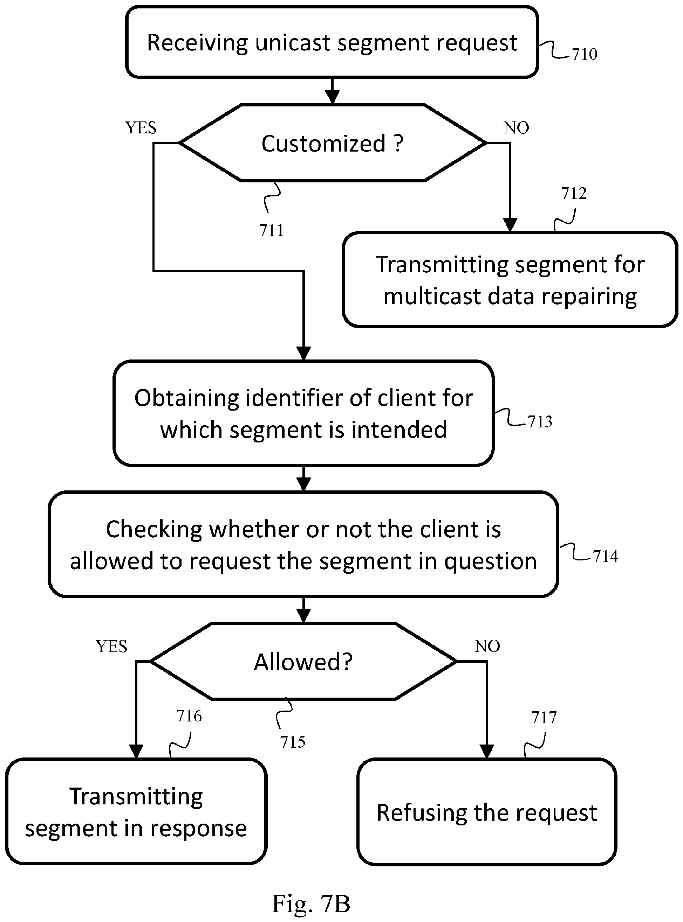

**Fig. 7B** schematically represents an algorithm for managing transmission of segments in a per-client customized audio and/or video content stream, in another embodiment. The algorithm of Fig. 7B is a method implemented by the unicast server equipment part 121b, which provides unicast data either for customized segments or for repairing segments. Repairing segments are unicast segments that are transmitted for repairing common (multicast) segments that have not been received or that have been received with errors.

In a step 710, the unicast server equipment part 121b receives a unicast segment request.

In a step 711, the unicast server equipment part 121b determines whether the request targets customized data or common data for repairing considerations. When the request targets customized data, a step 713 is performed; otherwise, a step 712 is performed.

In the step 712, the unicast server equipment part 121b transmits a common data segment in response to the request for repairing considerations.

In the step 713, the unicast server equipment part 121b determines for which client the targeted customized data are intended. The unicast server equipment part 121b obtains the identifier of the client in question. Typically, the identifier of the client is indicated in the request.

In a step 714, the unicast server equipment part 121b checks whether or not the client is allowed to request the segment in question. For example, the unicast server equipment part 121b checks whether or not the requested segment corresponds to a segment timeslot in which customized data are planned to be transmitted. For example, the unicast server equipment part 121b checks whether or not the requested segment corresponds to a timeslot in which customized data are planned to be transmitted for a group of clients to which the client in question belongs. It can further be noted that signatures or the like may be applied or added to the request to ensure reliability of the origin of the request (trusted device). The result of the check is processed in a step 715: when the client is allowed to request the segment in question, a step 716 is performed; otherwise, a step 717 is performed.

In the step 716, the unicast server equipment part 121b transmits a customized segment in response to the request. In case of plural versions of customized data as already discussed, the unicast server equipment part 121b determines which version to transmit from the segment timeslot concerned and the identifier, and possibly the group, of the client in question. In a variant, the request contains an indication (such as a dedicated URL or URI path) of the version to be provided.

In the step 717, the unicast server equipment part 121b refuses the request, since the segment that is requested does not match the client identifier associated with the request.

## Claims

1. A method for delivering a customized audio and/or video stream from a server equipment to a plurality of clients in a content delivery network CDN, the audio and/or video stream being segmented over time into segments, wherein the method comprises:
- delivering common data segments via a multicast communication, common data segments being audio and/or video data segments intended to the plurality of clients;
- delivering customized data segments via unicast communications, customized data segments being audio and/or video data segments specifically intended for each client; and
- building, for each client according to an identifier of the client in question or information derived therefrom, one said customized audio and/or video stream from common data segments provided in multicast form by the server equipment and further including customized data segments provided in unicast form by the server equipment for customization to the client in question, wherein one or more customized data segments are interleaved between common data segments.

2. The method according to claim 1, wherein the clients are gathered by groups, the customized data segments are present at predefined timeslots in the audio and/or video stream, and at least some of the predefined timeslots happen at different points in time from one group to any other group.

3. The method according to claim 2, wherein regularly one or more predefined timeslots for customized data segments are common to all groups, while other predefined timeslots for customized data segments happen at different point in time from one group to any other group.

4. The method according to any one of claims 1 to 3, wherein the server equipment transmits the customized data segments at lower throughput than the common data segments.

5. The method according to any one of claims 1 to 4, wherein the customized data are watermark specific to the identifier of the client or to information derived therefrom.

6. The method according to claim 5, wherein a quantity *Qv* of plural versions is available for each customized data segment, each customized data segment including only a portion of the identifier or the client or of the information derived therefrom, the quantity *Qv* being the quantity of watermark possible variants in each customized data segment.

7. The method according to claim 6, wherein the clients are gathered by groups, the common data segments for each group are present at predefined timeslots in the audio and/or video stream, the common data are watermarked specifically to an identifier of the group to which the common data are intended, or to information derived therefrom, and a quantity *Q*'*v* of plural versions is available for each common data segment, each common data segment including only a portion of the identifier or the group or of the information derived therefrom, the quantity *Q'v* being the quantity of watermark possible variants in each common data segment.

8. The method according to any one of claims 1 to 4, wherein the customized data are advertisement data.

9. The method according to any one of claims 1 to 8, wherein, for at least one client, the audio and/or video stream is built by an agent in a device interconnecting a first network via which the at least one client in question is made accessible to the agent and a second network via which the server equipment is made accessible to the agent, the agent communicating with the at least one client in unicast form, the agent performing a multicast-to-unicast conversion of the common data received in multicast form from the server equipment.

10. The method according to any one of claims 1 to 8, wherein, for at least one client, the audio and/or video stream is built by the at least one client in question, the at least one client obtains the customized data from the server equipment and obtains the common data from an agent communicating with which the at least one client communicates in unicast form, the agent being embedded in a device interconnecting a first network via which the at least one client in question is made accessible to the agent and a second network via which the server equipment is made accessible to the agent, the agent performing a multicast-to-unicast conversion of the common data received in multicast form from the server equipment.

11. The method according to any one of claims 1 to 8, wherein the server equipment delivers continuous segments in multicast form and the audio and/or video stream is built by replacing segments received in multicast form by customized data segments.

12. A content delivery network CDN configured for delivering customized audio and/or video streams from a server equipment of the content delivery network CDN to a plurality of clients, the audio and/or video streams being segmented over time into segments, wherein the content delivery network CDN comprises electronics circuitry configured for:
- delivering common data segments via a multicast communication, common data segments being audio and/or video data segments intended to the plurality of clients;
- delivering customized data segments via unicast communications, customized data segments being audio and/or video data segments specifically intended for each client; and
- building, for each client according to an identifier of the client in question or information derived therefrom, one said customized audio and/or video stream from common data segments provided in multicast form by the server equipment and further including customized data segments provided in unicast form by the server equipment for customization to the client in question, wherein one or more customized data segments are interleaved between common data segments.

13. The content delivery network CDN according to claim 12, wherein the customized data are watermark specific to the identifier of the client or to information derived therefrom.

14. The content delivery network CDN according to claim 12, wherein the customized data are advertisement data.
